# EUROPEAN PATENT SPECIFICATION

(11) **EP 0 457 772 B1**
(45) Date of publication and mention of the grant of the patent: **07.09.1994**
(21) Application number: 90901877.2
(22) Date of filing: 18.01.1990
(51) Int. Cl.: A21D 2/18

(54) **COMPOSITION OF A DIETETIC FOOD IN THE FORM OF CRACKER WITH HIGH CONTENTS IN ALIMENTARY FIBER AND REDUCED CONTENTS IN CALORIES AND METHOD FOR PRODUCING THE SAME**
ZUSAMMENSETZUNG EINES DIÄTNAHRUNGSMITTELS IN FORM VON KEKSEN MIT HOHEM GEHALT AN NAHRUNGSFASERN UND NIEDRIGEM GEHALT AN KALORIEN UND VERFAHREN ZU IHRER HERSTELLUNG
COMPOSITION D'ALIMENT DIETETIQUE SOUS FORME DE CRACKER A HAUTE TENEUR EN FIBRES ALIMENTAIRES ET TENEUR REDUITE EN CALORIES; PROCEDE DE PRODUCTION CORRESPONDANT

(30) Priority: 19.01.1989 IT 4754889
(43) Date of publication of application: 27.11.1991
(73) Proprietor: DICOFARM S.P.A., I-00191 Roma (IT)
(72) Inventor: CARAMELLI, Gianfranco, I-00124 Roma (IT)
(74) Representative: Massari, Marcello
(86) International application number: IT9000008
(87) International publication number: WO9007879

(56) References cited:
- US-A- 4 379 173

## Description

This invention concerns a dietetic aliment in the form of cracker with high contents in natural fibers and reduced contents in calories.

This invention concerns also the method for producing this aliment.

The aliments eaten by the largest part of the populations of the most developed countries are very lacking in fibers because of the procedures of refinement are subjected.

Among these procedures, there are: flour's sifting, rise and other cereals and similar's hulling.

This lack in fiber brings two very serious inconveniences:
- a growing laziness of the intestine;
- the difficulty in reaching the sensation of satiety with a consequent lasting of the pangs of hunger even after eating a sufficient quantity of food from the point of view of the caloric contribution with a consequent overalimentation.

These inconveniences - by themselves - and even more so if associated, are the main responsibles of the eccess of weight, until obesity, that afflicts a high percentage of people belonging to the above mentioned populations.

As it seems impossible either to re-educate the consumers to eat rough products, or in consequence, inducing the alimentary industries not to produce refined foods, modern dietetics at present aims at studying compositions of products containing natural fibers, and at prescribing them as meals fiber integrators, especially in people with an altered lipidic or glycidic metabolism.

One of the main, if not the most important supplier of natural fibers in a concentrated shape is glucomannan, that is the fundamental ingredient of such a fiber integrators.

Glucomannan is drawn from Amorphofallus Konjac, a tuber of Far East origin.

It has the peculiarity of increasing its volume when soaked with water, until 100 times its initial volume.

Therefore glucomannan is very satisfying even from the point of view of provoking the desired sense of satiety.

However, glucomannan, because of its tendency to loose its peculiarities of swelling when subjected to manipulations and cooking doesn't fit for making finished goods and all the attempts made up to now to produce glucomannan's goods easily eatable and provided with alluring peculiarities of taste and flavour have failed.

Therefore up to now the administration of glucomannan has been made up to now almost exclusively in capsules and its confection of medicinal type doesn't attract the consumers to use it.

However, US Patent No. 4,379,173 of 05.04.1983 is known, that discloses a process for preparing glucomannan containing biscuits.

According to this process, roasted flour is prepared and glucomannan powder is mixed with the roasted flour.

Water and gluten contained in the roasted flour provide a binding effect between the glucomannan powder and flour. The mixture is placed in a mold for baking at a relatively low temperature of 70° to 85°C.

However this process is questionable for the following reasons:
- Roasting of flour produces a non-homogeneous product in connection with complex carbohydrates as starch and maltodextrines; consequently the basic product may have different properties each time it is prepared.
- Kneading of roasted flour is difficult and accordingly the resulting mixture could be less homogeneous. Furthermore the double heating, i.e. roasting the flour and baking of the mixture, could impair the organoleptic properties of the final product.
- A homogeneous dispersion of glucomannan in the mixture could be difficult to obtain.
- Water utilized for obtaining the mixture could impair the desired the property of swelling of glucomannan.

Applicant, on the contrary, has found and got ready a particular composition of ingredients including glucomannan, that when subjected to a procedure involving a precise succession of operations allows the production of crackers which fully satisfy the need to supply glucomannan's fiber in an alluring and tasteful pleasant shape.

The applicant has found that some compositions containing the ingredients quoted in the following examples in the indicated range of proportions, are suitable, when appropriately prepared and baked, to form crackers with a good flavour and a very good taste.

The general composition in weight is as follows:

| | |
|---|---|
| Wheat meal | 60÷85% |
| Refined vegetable oil | 8÷16% |
| Glucomannan | 2÷10% |
| Malt extract | 1÷ 2,2% |
| Refined salt | 1÷ 2% |
| Yeast | 0,2÷ 0,8% |

In particular, the applicant has tested that in order to get crackers that respect the exigence of adapting the production's technical requirements with the dietetic direction to which the crackers are addressed, the following particular composition is the best one:

| | |
|---|---|
| Wheat meal | 82,3% |
| Refined vegetable oil | 9,4% |
| Glucomannan | 4,7% |
| Malt extract | 1,6% |
| Refined salt | 1,3% |
| Yeast | 0,7% |

In particular in the product tested by applicant the quality of Glucomannan used is known like highly refined and with high molecular weight and viscosity that has proved to be the best for the aims of the invention.

In connection with the composition for producing the cracker a method has been devised that, unique, allows such production.

This method includes the following steps:
a) intimate blending apart glucomannan and vegetable oil;
b) kneading together the other ingredients;
c) leaving the knead rise for 18 hours;
d) amalgamating the blend of glucomannan and refined vegetable oil in the risen knead;
e) let the whole knead rise for 30-60' (minutes);
f) superimposing in sheets of pastry and laminating the dough;
g) engraving the lamina with round-die;
h) depositing the lamina on the stove grating and baking it for 3-4' (minutes) at a temperature of 220°-320° C.

## Claims

1. Composition of a dietetic food in the form of cracker with a high content in alimentary fiber and a reduced caloric content including:
| | |
|---|---|
| Wheat meal | 60÷85% |
| Refined vegetable oil | 8÷16% |
| Glucomannan | 2÷10% |
| Malt extract | 1÷ 2,2% |
| Refined salt | 1÷ 2% |
| Yeast | 0,2÷ 0,8% |

2. Composition of a dietetic food in the form of cracker according to the claim 1, that includes in particular:
| | |
|---|---|
| Wheat meal | 82,3% |
| Refined vegetable oil | 9,4% |
| Glucomannan | 4,7% |
| Malt extract | 1,6% |
| Refined salt | 1,3% |
| Yeast | 0,7% |

3. Process to obtain a cracker with a high content in alimentary fiber and a reduced caloric content using the ingredients of claim 1 including the following stages:
a) intimate blending apart glucomannan and vegetable oil; b) kneading together the other ingredients; c) let the knead rise for 18 hours; d) amalgamating the blend of glucomannan and refined vegetable oil in the risen knead; e) let the whole knead rise for 30-60 minutes; f) superimpose the sheets of pastry and laminate the dough; g) engrave the lamina with round-die; h) deposit the lamina on the stove grating and bake it for 3-4 minutes at a temperature of 220°-320° C.

## Patentansprüche

1. Zusammensetzung eines diätetischen Nahrungsmittels in Crackerform mit einem hohen Gehalt an Ernährungsfaserstoffen und reduziertem Kaloriengehalt, bestehend aus:
| | |
|---|---|
| Weizenmehl | 60 - 85 % |
| Glucomannan | 8 - 16 % |
| Malzextrakt | 1 - 2,2 % |
| Edelsalz | 0,2 - 0,8 % |
| Hefe | 0,2 - 0,8 % |

2. Zusammensetzung eines diätetischen Nahrungsmittels in Crackerform nach Anspruch 1, bestehend im einzelnen aus:
| | |
|---|---|
| Weizenmehl | 82,3 % |
| raffiniertem Pflanzenöl | 9,4 % |
| Glucomannan | 4,7 % |
| Malzextrakt | 1,6 % |
| Edelsalz | 1,3 % |
| Hefe | 0,7 % |

3. Verfahren zur Herstellung eines Crackers mit einem hohen Gehalt an Ernährungsfaserstoffen und einem reduzierten Kaloriengehalt unter Verwendung der Ingredientien nach Anspruch 1 mit den folgenden Schritten:
a) innige Vermischung von Glucomannan und Pflanzenöl;
b) Zusammenkneten der anderen Ingredientien;
c) Gehenlassen der Knetmasse für 18 Stunden;
d) Einarbeiten der Mischung aus Glucomannan und raffiniertem Pflanzenöl in die gegangene Knetmasse;
e) Gehenlassen der Gesamtknetmasse für 30 - 60 Minuten;
f) Übereinanderlegen des Teiges in Blätterteiglagen und ausrollen;
g) Ausstechen des Laminates mit einem Rundstecher;
h) Ablegen des Laminates auf dem Ofenrost und Backen für 3 - 4 Minuten bei einer Temperatur von 220 - 320 °C.

## Revendications

1. Composition d'un aliment diététique sous forme d'un biscuit sec à teneur élevée en fibres alimentaires et à teneur réduite en calories, comprenant:
- farine de blé: 60 à 85%,
- huile végétale raffinée: 8 à 16%,
- glucomannane: 2 à 10%,
- extrait de malte: 1 à 2,2%,
- sel raffiné: 1 à 2%,
- levure: 0,2 à 0,8%.

2. Composition d'un aliment diététique sous forme d'un biscuit sec selon la revendication 1, qui comprend en particulier:
- farine de blé: 82,3%,
- huile végétale raffinée: 9,4%
- glucomannane: 4,7%,
- extrait de malt: 1,6%,
- sel raffiné: 1,3%,
- levure: 0,7%.

3. Procédé d'obtention d'un biscuit sec à teneur élevée en fibres alimentaires et à teneur réduite en calories en utilisant les ingrédients de la revendication 1, selon les étapes suivantes:
a) on mélange intimement et séparément le glucamannane et l'huile végétale,
b) on pétrit les autres ingrédients ensemble,
c) on laisse la pâte pétrie lever pendant 18 heures,
d) on amalgame le mélange de glucomannane et d'huile végétale raffinée à la pâte pétrie levée,
e) on laisse l'ensemble de la pâte pétrie lever pendant 30 à 60 minutes,
f) on superpose les couches de pâtisserie et on étale la pâte,
g) on découpe l'abaisse avec une matrice ronde;
h) on dépose l'abaisse sur la grille du four et on cuit pendant 3-4 minutes à une température de 220°-320°C.
